# EUROPEAN PATENT APPLICATION

(11) **EP 4 557 598 A1**
(43) Date of publication of application: **21.05.2025**
(21) Application number: 22956027.1
(22) Date of filing: 24.08.2022
(51) Int. Cl.: H02M 3/335, H02J 3/32

(54) **REGULATION CIRCUIT AND SYSTEM FOR BATTERY, AND REGULATION METHOD**

(71) Applicant: Contemporary Amperex Technology Co., Limited, Ningde, Fujian 352100 (CN)
(72) Inventor: LIU, Diping, Ningde, Fujian 352100 (CN); YAN, Yu, Ningde, Fujian 352100 (CN); CAI, Feilong, Ningde, Fujian 352100 (CN); LIN, Longzhen, Ningde, Fujian 352100 (CN)
(74) Representative: Gong, Jinping
(86) International application number: PCT/CN2022/114593
(87) International publication number: WO 2024/040479

(57) **Abstract**

This application provides a regulation circuit applicable to a battery, a regulation system, and a regulation method. The regulation circuit may include: a battery side, configured to be connected to the battery; a bus side, configured to be connected to an external power supply; a power module, configured to regulate a voltage and connected between the battery side and the bus side; and a control switch group. The control switch group includes: a first control switch, connected between the bus side and the power module; a second control switch, connected between the first control switch and the battery side; and a third control switch, connected between the power module and the battery side. The above implementation can meet requirements on the charge voltage, discharge voltage, and operating temperature of the battery in different scenarios, and improve efficiency of battery heating.

## Description

### TECHNICAL FIELD

This application relates to the technical field of batteries, and in particular, to a regulation circuit applicable to a battery, a regulation system, a regulation method applicable to the regulation circuit, a regulation device applicable to the regulation circuit, an electronic device, a computer-readable storage medium, and a computer program product.

### BACKGROUND

With the advancement of battery technology, more and more electrical devices are powered by batteries.

In some circumstances, external characteristics of a battery are prone to be affected by an ambient temperature. For example, in a low-temperature environment, the capacity of the battery will decrease, making the battery unable to be fully charged, and reducing a lifespan and an effective capacity of the battery. Therefore, in some environments, the battery needs to be preheated to a normal operating temperature.

How to meet the requirements of the battery in different scenarios is an urgent technical issue in this field.

### SUMMARY

This application aims to solve at least one of technical problems in the related art. An objective of this application is to disclose a regulation circuit applicable to a battery, a regulation system, a regulation method applicable to the regulation circuit, a regulation device applicable to the regulation circuit, an electronic device, a computer-readable storage medium, and a computer program product to facilitate voltage regulation or heating of the battery and meet diverse operating requirements of the battery.

An embodiment of this application in a first aspect provides a regulation circuit applicable to a battery. The regulation circuit includes: a battery side, configured to be connected to the battery; a bus side, configured to be connected to an external power supply; a power module, configured to regulate a voltage and connected between the battery side and the bus side; and a control switch group. The control switch group includes: a first control switch, connected between the bus side and the power module; a second control switch, connected between the first control switch and the battery side; and a third control switch, connected between the power module and the battery side.

In the technical solution of this embodiment of this application, the first control switch is disposed between the external power supply and the power module, the second control switch is disposed between the first control switch and the battery, and the third control switch is disposed between the power module and the battery. In this way, by controlling the first control switch, the second control switch, and the third control switch, the regulation circuit can be switched between different working modes (for example, a buck-boost mode and a battery heating mode), so as to meet the requirements (for example, charge voltage, discharge voltage, and operating temperature) of the battery in different scenarios.

Specifically, by just turning on the first control switch and the third control switch, the power module can regulate the charge voltage and the discharge voltage between the battery and the external power supply. By just turning on the second control switch, a current loop can be formed between the power module and the battery, so that the battery can be heated up by charging and discharging in the current loop. In this way, a plurality of batteries in the system can be connected to a plurality of regulation circuits, so that the plurality of batteries can be controlled independently for heating. In addition, a plurality of batteries in the system can be heated simultaneously to improve the heating efficiency, without a need to heat up the batteries one by one.

In some embodiments, the power module includes at least one bridge arm and at least one inductance element, and a first end of each inductance element among the at least one inductance element is connected to a corresponding one bridge arm among the at least one bridge arm. On the one hand, the inductance element in the power module in the buck-boost mode can serve as an energy storage element to regulate the charge voltage and discharge voltage of the battery. On the other hand, the inductance element in the battery heating mode can change the current direction in the current loop more quickly by manipulating a hysteresis effect exerted by the inductance element on the current change, so as to perform pulse heating on the battery more frequently.

In some embodiments, a first end of the first control switch is connected to a first end of the bus side, and a second end of the first control switch is connected to a first end of each bridge arm among the at least one bridge arm. A first end of the second control switch is connected to the second end of the first control switch, and a second end of the second control switch is connected to a first end of the battery side. A first end of the third control switch is connected to a second end of each inductance element among the at least one inductance element, and a second end of the third control switch is connected to the second end of the second control switch. A second end of each bridge arm among the at least one bridge arm is connected to a second end of the bus side and a second end of the battery side. In this way, by controlling the first control switch, the second control switch, and the third control switch, the regulation circuit can be switched between the buck-boost mode and the battery heating mode. Specifically, by just turning on the first control switch and the third control switch, the power module can regulate the charge voltage and the discharge voltage between the battery and the external power supply. By just turning on the second control switch, a current loop can be formed between the power module and the battery, so as to heat up a plurality of batteries simultaneously and improve the efficiency of heating. In addition, the inductance element can change the current direction in the current loop quickly by manipulating the hysteresis effect exerted by the inductance element on the current change, so as to perform pulse heating on the batteries more frequently.

In some embodiments, the power module further includes a bus capacitance element and a battery capacitance element. The bus capacitance element is connected in parallel to each bridge arm among the at least one bridge arm. Two ends of the battery capacitance element are connected to the second end of each inductance element and the second end of each bridge arm respectively. By connecting the capacitance elements in parallel, the voltage of the regulation circuit can be stabilized to improve the stability of the regulation circuit.

In some embodiments, each bridge arm among the at least one bridge arm includes a plurality of power semiconductor devices connected in series. The first end of each inductance element is connected between two power semiconductor devices among the plurality of power semiconductor devices of the corresponding one bridge arm. The power module further includes a flying capacitance element connected in parallel to the two power semiconductor devices. By disposing the capacitor on the bridge arm, the voltage of the regulation circuit can be stabilized to further improve the stability of the regulation circuit.

In some embodiments, the control switch group further includes a pre-charge control device. The pre-charge control device is connected in parallel to at least one control switch among the first control switch, the second control switch, and the third control switch. The pre-charge control device makes it convenient to perform power-on pre-charge safely for the bus capacitance element or battery capacitance element, so as to avoid damage to the circuit caused by an excessive current in the circuit at a moment of connecting the regulation circuit to an external power supply or battery.

In some embodiments, the pre-charge control device includes a resistance element and a fourth control switch. This makes it convenient to perform power-on pre-charge safely for the bus capacitor or battery capacitor.

In some embodiments, the regulation circuit further includes: a first safety device, connected between the first control switch and the bus side; and/or a second safety device, connected between the second control switch and the battery side, and between the third control switch and the battery side. The safety device can melt and blow out quickly when a short circuit occurs on the battery side or the bus side of the regulation circuit, thereby protecting the regulation circuit.

In some embodiments, the regulation circuit further includes: a first lightning protection device, where an input side of the first lightning protection device is connected to the bus side; and/or, a second lightning protection device, where an input side of the second lightning protection device is connected to the battery side. The lightning protection device can prevent the regulation circuit from being struck by lightning, thereby protecting the circuit.

An embodiment of this application in a second aspect provides a regulation system. The regulation system includes a battery and the regulation circuit according to the above embodiment. The technical solution of this embodiment achieves the same technical effects as the foregoing regulation circuit.

An embodiment of this application in a third aspect provides a regulation method applicable to the regulation circuit disclosed in the above embodiment. The regulation method includes: obtaining an indication signal, where the indication signal is used for indicating a working mode of the regulation circuit, the working mode includes a buck-boost mode and a battery heating mode, and, in the buck-boost mode, the power module is able to regulate a voltage between the battery and an external power supply, and, in the battery heating mode, the battery is able to be heated up; and controlling, based on the indication signal, the control switch in the control switch group to switch the working mode of the regulation circuit. In this way, by controlling the first control switch, the second control switch, and the third control switch, the regulation circuit can be switched between the buck-boost mode and the battery heating mode. Specifically, by just turning on the first control switch and the third control switch, the power module can regulate the charge voltage and the discharge voltage between the battery and the external power supply. By just turning on the second control switch, a current loop can be formed between the power module and the battery, so as to heat up a plurality of batteries simultaneously and improve the efficiency of heating.

In some embodiments, the controlling, based on the indication signal, the control switch in the control switch group to switch the working mode of the regulation circuit, includes: exercising, in response to the indication signal that indicates the buck-boost mode, control to turn on the first control switch and the third control switch and turn off the second control switch to send the regulation circuit into the buck-boost mode; and exercising, in response to the indication signal that indicates the battery heating mode, control to turn off the first control switch and the third control switch and turn on the second control switch to send the regulation circuit into the battery heating mode. In this way, by controlling the first control switch, the second control switch, and the third control switch, the regulation circuit can be switched between the buck-boost mode and the battery heating mode.

In some embodiments, the power module further includes a bus capacitance element and a battery capacitance element. The bus capacitance element is connected in parallel to each bridge arm among the at least one bridge arm. Two ends of the battery capacitance element are connected to the second end of each inductance element and the second end of each bridge arm respectively. The regulation method further includes: controlling at least a control switch in the control switch group to charge one of the bus capacitance element or the battery capacitance element; and controlling at least a control switch in the control switch group to charge the other of the bus capacitance element or the battery capacitance element. By performing power-on pre-charge for the bus capacitance element or battery capacitance element, this application avoids damage to the circuit caused by an excessive current generated at a moment of connecting the regulation circuit to an external power supply or battery.

In some embodiments, the control switch group further includes a pre-charge control device. The pre-charge control device is connected in parallel to one control switch among the first control switch, the second control switch, and the third control switch. The controlling at least a control switch in the control switch group to charge one of the bus capacitance element or the battery capacitance element includes: exercising control to turn on the pre-charge control device and turn off the first control switch, the second control switch, and the third control switch, so as to charge one of the bus capacitance element or the battery capacitance element, whichever is connected to the pre-charge control device. The controlling at least a control switch in the control switch group to charge the other of the bus capacitance element or the battery capacitance element includes: exercising control to turn off the pre-charge control device, and exercising control to turn on a control switch connected in parallel to the pre-charge control device, so as to charge the other of the bus capacitance element or the battery capacitance element. The pre-charge control device can improve safety of power-on pre-charge for the bus capacitance element and the battery capacitance element.

In some embodiments, the controlling at least a control switch in the control switch group to charge the other of the bus capacitance element or the battery capacitance element includes: controlling, in response to a first preset condition, at least a control switch in the control switch group to charge the other of the bus capacitance element or the battery capacitance element. The first preset condition includes at least one of: a time period for charging one of the bus capacitance element or the battery capacitance element is less than or equal to a first preset time threshold; or, a voltage of one of the bus capacitance element or the battery capacitance element is greater than or equal to a first preset voltage threshold. This ensures that the voltage of the pre-charged battery capacitance element or busbar capacitor meets a specified requirement (for example, the voltage is close to the voltage of the battery or the voltage of the external power supply), and in turn, ensures normal operation of the regulation circuit.

In some embodiments, the exercising, in response to the indication signal that indicates the buck-boost mode, control to turn on the first control switch and the third control switch and turn off the second control switch to send the regulation circuit into the buck-boost mode, includes: exercising, in response to a second preset condition, control to turn on the first control switch and the third control switch and turn off the second control switch to send the regulation circuit into the buck-boost mode. The second preset condition includes at least one of: a time period for charging the other of the bus capacitance element or the battery capacitance element is less than or equal to a second preset time threshold; or, a voltage of the other of the bus capacitance element or the battery capacitance element is greater than or equal to a second preset voltage threshold. This ensures that the voltage of the pre-charged battery capacitance element or busbar capacitor meets a specified requirement (for example, the voltage is close to the voltage of the battery or the voltage of the external power supply), and in turn, ensures normal operation of the regulation circuit.

In some embodiments, the power module includes at least one bridge arm and at least one inductance element. A first end of each inductance element among the at least one inductance element is connected to a corresponding one bridge arm among the at least one bridge arm. Each bridge arm among the at least one bridge arm includes a plurality of power semiconductor devices connected in series. The first end of each inductance element is connected between two power semiconductor devices among the plurality of power semiconductor devices of the corresponding one bridge arm. The power module further includes a flying capacitance element connected in parallel to the two power semiconductor devices. The controlling at least a control switch in the control switch group to charge one of the bus capacitance element or the battery capacitance element includes: exercising, for each bridge arm, control to turn on a power semiconductor device other than the two power semiconductor devices among the plurality of power semiconductor devices and turn off the two power semiconductor devices; and controlling a control switch in the control switch group to charge one of the bus capacitance element or the battery capacitance element, and charge the flying capacitance element. In this way, power-on pre-charge can be performed for the flying capacitance element, so as to avoid damage to the circuit caused by an excessive current in the circuit at a moment of connecting the regulation circuit to an external power supply or battery.

In some embodiments, the regulation method further includes: obtaining a historical voltage and a current voltage of the flying capacitance element; determining a difference between the historical voltage and the current voltage; and controlling, in response to a determining result that the difference between the historical voltage and the current voltage is greater than a preset difference threshold, a plurality of power semiconductor devices of the bridge arm connected to the flying capacitance element to regulate the voltage of the flying capacitance element. In this way, the voltage of the flying capacitor can be monitored and regulated in real time to avoid abrupt changes of the voltage, thereby ensuring normal operation of the regulation circuit.

In some embodiments, the exercising, in response to the indication signal that indicates the battery heating mode, control to turn off the first control switch and the third control switch and turn on the second control switch to send the regulation circuit into the battery heating mode, includes: exercising control to turn off the first control switch and the second control switch and turn on the third control switch to step down a voltage of at least the bus capacitance element; and exercising, in response to a third preset condition, control to turn on the second control switch and turn off the third control switch to send the regulation circuit into the battery heating mode. The third preset condition includes at least one of: a time period for stepping down the voltage of the bus capacitance element is less than or equal to a third preset time threshold; or, the voltage of the bus capacitance element is greater than or equal to a third preset voltage threshold. This ensures that the bus capacitor meets the specified requirement (for example, the voltage of the bus capacitor is close to the voltage of the battery) in battery heating mode, and enables the regulation circuit to enter the battery heating mode stably.

In some embodiments, the exercising, in response to the indication signal that indicates the buck-boost mode, control to turn on the first control switch and the third control switch and turn off the second control switch to send the regulation circuit into the buck-boost mode, includes: regulating a voltage of the battery capacitance element in response to the regulation circuit being in the battery heating mode; exercising, in response to the voltage of the battery capacitance element being greater than or equal to a fourth preset voltage threshold, control to turn off the second control switch and turn on the third control switch to charge the bus capacitance element; and exercising, in response to the voltage of the bus capacitance element being greater than or equal to a fifth preset voltage threshold, control to turn on the first control switch to send the regulation circuit into the buck-boost mode. In this way, the regulation circuit in the battery heating mode can quickly switch to the buck-boost mode without a need to perform power-on pre-charge for the bus capacitance element by turning on the pre-charge control device again.

An embodiment of this application in a fourth aspect provides a regulation device applicable to the regulation circuit disclosed in the above embodiment. The regulation device includes: an obtaining module, configured to obtain an indication signal, where the indication signal is used for indicating a working mode of the regulation circuit, the working mode includes a buck-boost mode and a battery heating mode, and, in the buck-boost mode, the power module is able to regulate a voltage between the battery and an external power supply, and, in the battery heating mode, the battery is able to be heated up; and, a control module, configured to control, based on the indication signal, the control switch in the control switch group to switch the working mode of the regulation circuit. The technical solution of this embodiment achieves the same technical effects as the foregoing regulation method.

An embodiment in a fifth aspect of this application provides an electronic device. The electronic device includes: at least one processor; and a memory communicatively connected to the at least one processor. The memory stores an instruction executable by the at least one processor. The instruction is executed by the at least one processor so that the at least one processor is enabled to perform the regulation method disclosed in the foregoing embodiment.

An embodiment of this application in a sixth aspect provides a computer-readable storage medium that stores a computer instruction. The computer instruction is configured to cause a computer to perform the regulation method disclosed in the foregoing embodiment.

An embodiment of this application in the seventh aspect provides a computer program product, including a computer program. When executed by a processor, the computer program implements the regulation method disclosed in the foregoing embodiment.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

Unless otherwise specified, the same reference numerals throughout a plurality of drawings represent the same or similar components or elements. The drawings are not necessarily drawn to scale. Understandably, the drawings merely depict some embodiments of this application, but are not to be intended as any limitation on the scope of this application.
FIG. 1 is a schematic structural diagram of a vehicle according to some embodiments of this application;
FIG. 2 is a schematic structural diagram of a regulation circuit according to some embodiments of this application;
FIG. 3 is a schematic circuit diagram of the regulation circuit in FIG. 2 and shows a power loop according to some embodiments;
FIG. 4 is a schematic circuit diagram of the regulation circuit in FIG. 2 and shows a power loop according to some other embodiments;
FIG. 5 is a schematic circuit diagram of the regulation circuit in FIG. 2 and shows a power loop according to some other embodiments;
FIG. 6 is a schematic circuit diagram of the regulation circuit in FIG. 2 and shows a power loop and a control switch group according to some other embodiments;
FIG. 7 is a schematic circuit diagram of a regulation system according to some embodiments of this application;
FIG. 8 is a flowchart of a regulation method according to some embodiments of this application;
FIG. 9a to FIG. 9e are schematic circuit diagrams of the regulation circuit in different states in FIG. 3, where FIG. 9a shows that a pre-charge control device in the regulation circuit is in an on state, FIG. 9b shows that a first control switch in the regulation circuit is in an on state; FIG. 9c shows that the first control switch and a third control switch in the regulation circuit are in an on state; FIG. 9d shows that the third control switch in the regulation circuit is in an on state; and, FIG. 9e shows that a second control switch in the regulation circuit is in an on state;
FIG. 10a to FIG. 10e are schematic circuit diagrams of the regulation circuit in different states in FIG. 4, where FIG. 10a shows that a pre-charge control device in the regulation circuit is in an on state,
FIG. 10b shows that a first control switch in the regulation circuit is in an on state; FIG. 10c shows that the first control switch and a third control switch in the regulation circuit are in an on state; FIG. 10d shows that the third control switch in the regulation circuit is in an on state; and, FIG. 10e shows that a second control switch in the regulation circuit is in an on state;
FIG. 11 is a structural block diagram of a regulation device according to some embodiments of this application; and
FIG. 12 is a flowchart of a regulation method according to some other embodiments of this application.

List of reference numerals:
vehicle 1000; battery 100.

### DETAILED DESCRIPTION OF EMBODIMENTS

Some embodiments of the technical solutions of this application are described in detail below with reference to the drawings. The following embodiments are merely intended as examples to describe the technical solutions of this application more clearly, but not intended to limit the protection scope of this application.

Unless otherwise defined, all technical and scientific terms used herein bear the same meanings as what is normally understood by a person skilled in the technical field of this application. The terms used herein are merely intended to describe specific embodiments but not to limit this application. The terms "include" and "contain" and any variations thereof used in the specification, claims, and brief description of drawings of this application are intended as non-exclusive inclusion.

In the description of the embodiments of this application, the technical terms "first" and "second" are merely intended to distinguish between different items but not intended to indicate or imply relative importance or implicitly specify the number of the indicated technical features, specific order, or order of precedence. In the description of the embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that the embodiments described herein may be combined with other embodiments.

In the description of embodiments of this application, the term "and/or" merely indicates a relationship between related items, and represents three possible relationships. For example, "A and/or B" may represent the following three circumstances: A alone, both A and B, and B alone. In addition, the character "/" herein generally indicates an "or" relationship between the item preceding the character and the item following the character.

In the description of embodiments of this application, the term "a plurality of" means two or more (including two). Similarly, "a plurality of groups" means two or more groups (including two groups), and "a plurality of pieces" means two or more pieces (including two pieces).

In the description of embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the drawings, and is merely intended for ease or brevity of description of embodiments of this application, but not intended to indicate or imply that the indicated device or component is necessarily located in the specified direction or constructed or operated in the specified direction. Therefore, such terms are not to be understood as a limitation on embodiments of this application.

In the description of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediary; or understood as internal communication between two components or interaction between two components. A person of ordinary skill in the art can understand the specific meanings of the terms in the embodiments of this application according to specific situations.

Currently, the market trend shows that batteries are applied more extensively. Batteries are applied as power batteries or energy storage batteries. Batteries are not only used as energy storage batteries in energy storage power systems such as hydro, thermal, wind, and solar power stations, but also widely used as power batteries in electric means of transport such as electric bicycles, electric motorcycles, and electric vehicles, and used in many other fields such as military equipment and aerospace. The market demand for batteries keeps soaring with the increase of the application fields of the batteries.

The applicant hereof has noticed that external characteristics of a battery are prone to be affected by an ambient temperature. For example, in a low-temperature environment, the capacity of the battery will decrease, making the battery unable to be fully charged, and reducing a lifespan and an effective capacity of the battery.

To avoid the problem of a fading capacity of the battery, the applicant hereof has conducted in-depth research, and hereby discloses a regulation circuit applicable to a battery, a regulation system, a regulation method applicable to the regulation circuit, a regulation device applicable to the regulation circuit, an electronic device, a computer-readable storage medium, and a computer program product to facilitate voltage regulation or heating of the battery and meet diverse operating requirements of the battery.

In the technical solution of this application, the first control switch is disposed between the external power supply and the power module, the second control switch is disposed between the first control switch and the battery, and the third control switch is disposed between the power module and the battery. In this way, by controlling the first control switch, the second control switch, and the third control switch, the regulation circuit can be switched between different working modes (for example, a buck-boost mode and a battery heating mode), so as to meet the requirements on the charge voltage, discharge voltage, and operating temperature of the battery in different scenarios.

The regulation circuit disclosed in an embodiment of this application is applicable to energy storage devices (such as a battery). The battery may be a lithium-ion battery, a lithium metal battery, a lead-acid battery, a nickel-cadmium battery, a nickel-hydrogen battery, a lithium-sulfur battery, a lithium-air battery, a sodium-ion battery, or the like. The type of the battery is not limited herein. The battery is applicable to an energy storage system. In addition, the battery is applicable to, but not limited to use in, electrical devices such as a vehicle, watercraft, or aircraft. The electrical devices may be, but are not limited to, a mobile phone, a tablet, a notebook computer, an electric toy, an electric tool, an electric power cart, an electric vehicle, a ship, a spacecraft, or the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like. The regulation circuit makes it convenient to meet requirements on the charge voltage, discharge voltage, and operating temperature of the battery in different scenarios.

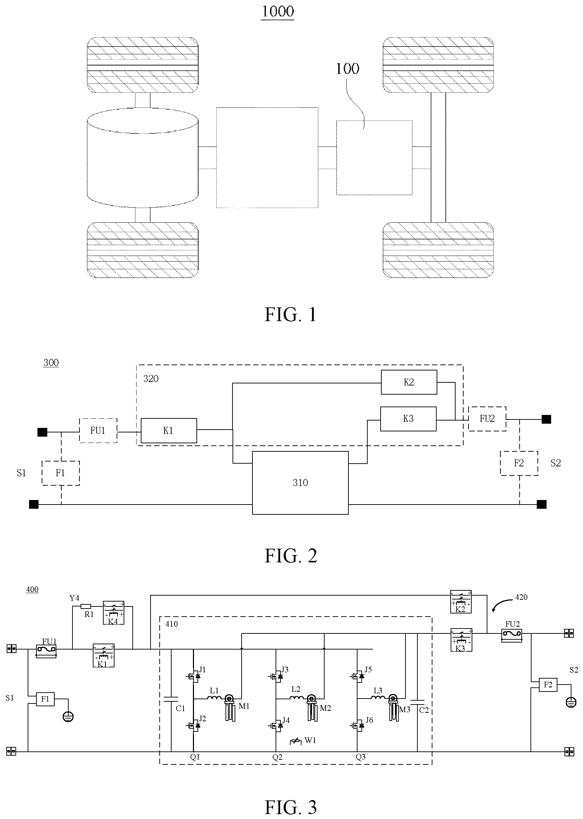

The regulation circuit in an embodiment of this application is applicable to an energy storage system to regulate a battery in the energy storage system, and also applicable to an electrical device such as a vehicle, watercraft, or aircraft to regulate a battery in the electrical device. In the energy storage system, the battery regulated by the regulation circuit is used as an energy storage device in the energy storage system to store and supply electrical energy. In the electrical device, for example, in a vehicle 1000 shown in FIG. 1, the battery 100 regulated by the regulation circuit may be configured to supply power to the vehicle 1000. For example, the battery 100 may serve as an operating power supply of the vehicle 1000. For example, the battery may be configured to meet operating power requirements of the vehicle 1000 that is being started or navigated or running. In addition, the battery 100 may be used as a driving power supply of the vehicle 1000, and provide driving power for the vehicle 1000 in place of fuel oil or natural gas fully or partially.

As shown in FIG. 2, a regulation circuit 300 applicable to a battery (for example, the battery 100 shown in FIG. 1) in some embodiments of this application may include a bus side S1, a battery side S2, a power module 310, and a control switch group 320. The battery side S2 is configured to be connected to the battery 100. The bus side S1 is configured to be connected to an external power supply (not shown). The power module 310 is configured to regulate a voltage and connected between the battery side S2 and the bus side S1. The control switch group 320 may include: a first control switch K1, a second control switch K2, and a third control switch K3. The first control switch K1 is connected between the bus side S1 and the power module 310. The second control switch K2 is connected between the first control switch K1 and the battery side S2. The third control switch K3 is connected between the power module 310 and the battery side S2.

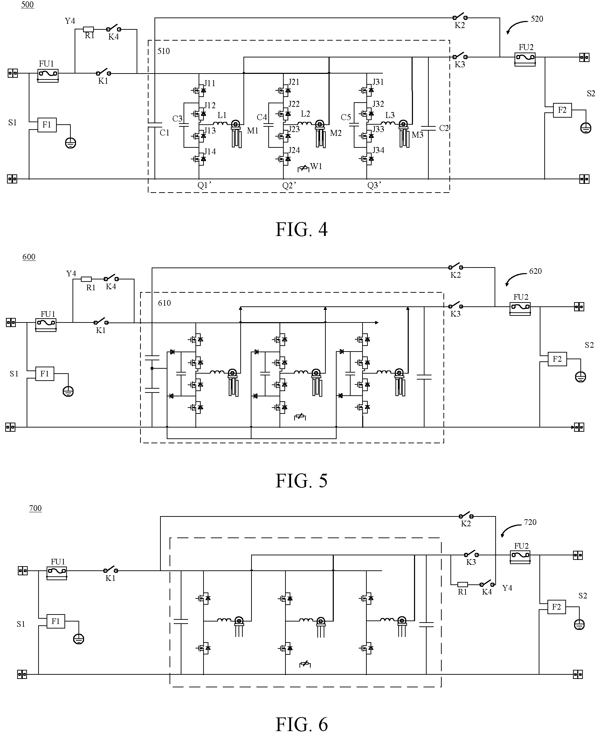

The external power supply may be any device capable of providing electrical power, such as a photovoltaic panel or an electrical grid. At least one of the first control switch, the second control switch, or the third control switch may be a controllable switching device such as a contactor or a Metal-Oxide-Semiconductor Field-Effect Transistor (MOSFET). The power module 310 may be a module of any topology capable of regulating voltage in a circuit. For example, the power module 310 may assume a non-multilevel topology (such as the power module 410 in the regulation circuit 400 shown in FIG. 3) or a multilevel topology (such as the power module 510 in the regulation circuit 500 shown in FIG. 4, and the power module 610 in the regulation circuit 600 shown in FIG. 5) as required. In addition, the power module 310 may include a single bridge arm, two bridge arms, or three bridge arms (for example, three bridge arms Q1, Q2, and Q3 in the power module 410 shown in FIG. 3; three bridge arms Q1', Q2', and Q3' in the power module 510 shown in FIG. 4), or more bridge arms. In addition, "connection" used herein may mean an electrical connection.

By controlling the first control switch, the second control switch, and the third control switch, the foregoing embodiment switches the regulation circuit between different working modes (for example, a buck-boost mode and a battery heating mode), so as to meet the requirements on the charge voltage, discharge voltage, and operating temperature of the battery in different scenarios. In addition, the foregoing embodiment can heat up a plurality of batteries simultaneously, thereby improving the heating efficiency.

As used herein, the term "buck-boost mode" means a mode in which the power module can regulate the voltage transmitted between an external power supply and a battery. The term "battery heating mode" means a mode in which the battery can be heated to raise temperature.

According to some embodiments of this application, the power module 310 may include at least one bridge arm and at least one inductance element. A first end of each inductance element among the at least one inductance element is connected to a corresponding one bridge arm among the at least one bridge arm.

For example, as mentioned above, the power module 310 may assume a structure of the power module 410 shown in FIG. 3. That is, the power module may include three bridge arms Q1, Q2, Q3 and three inductance elements L1, L2, L3 connected to the three bridge arms respectively. Using the inductance element L1 as an example, the first end of the inductance element L1 is connected to a corresponding bridge arm Q1. Alternatively, the power module 310 may assume a structure of the power module 510 shown in FIG. 4, or a structure of the power module 610 shown in FIG. 5. In other words, the power module 310 may include a single bridge arm, two bridge arms (the three bridge arms shown in FIG. 3 reduced by one bridge arm), four bridge arms, or the like as required, and this application is not limited to such configurations of the power module. When the power module 310 includes a plurality of bridge arms, the plurality of bridge arms may be connected in parallel. The number of inductance elements may be the same as the number of bridge arms. Alternatively, the number of inductance elements may be different from the number of bridge arms, for example, may be less than the number of bridge arms. In addition, each bridge arm may include a plurality of power semiconductor devices connected in series, for example, the power semiconductor devices J1 and J2 in the bridge arm Q1, the power semiconductor devices J3 and J4 in the bridge arm Q2, and the power semiconductor devices J5 and J6 in the bridge arm Q3, as shown in FIG. 3.

The power semiconductor devices may include an Insulated Gate Bipolar Transistor (IGBT), a MOSFET, a transistor, or other devices. Moreover, the inductance elements may include an inductor or other devices capable of storing energy and exerting a hysteresis effect on the current change.

On the one hand, the inductance element in the power module in the buck-boost mode can serve to regulate the charge voltage and discharge voltage of the battery. On the other hand, the inductance element in the battery heating mode can change the current direction in the current loop more quickly by manipulating a hysteresis effect exerted by the inductance element on the current change, so as to perform pulse heating on the battery more frequently.

According to some embodiments of this application, a first end of the first control switch is connected to a first end of the bus side, and a second end of the first control switch is connected to a first end of each bridge arm among the at least one bridge arm. A first end of the second control switch is connected to the second end of the first control switch, and a second end of the second control switch is connected to a first end of the battery side. A first end of the third control switch is connected to a second end of each inductance element among the at least one inductance element, and a second end of the third control switch is connected to the second end of the second control switch. A second end of each bridge arm among the at least one bridge arm is connected to a second end of the bus side and a second end of the battery side.

As shown in FIG. 3, the two ends of the first control switch K1 are connected to the first end of the bus side S1 and the first end of each bridge arm in at least one bridge arm respectively. The two ends of the second control switch K2 are connected to the second end of the first control switch K1 and the first end of the battery side S2 respectively. The two ends of the third control switch K3 are connected to the second end of each inductance element in at least one inductance element and the second end of the second control switch K2 respectively. Similarly, the first control switch K1, the second control switch K2, and the third control switch K3 in FIG. 4 are also connected in the above manner.

As shown in FIG. 3, if merely the first control switch K1 and the third control switch K3 are turned on, the external power supply and the battery will be connected together by the power module 410. In this case, the power module can serve to regulate voltage, and regulate the voltage transmitted between the external power supply and the battery. That is, the regulation circuit enters a buck-boost mode. The step-up or step-down of the voltage by the power module depends on a duty cycle in the power module, and may be set by an upper controller. In addition, if the second control switch K3 is turned on alone, the battery will be disconnected from the external power supply to form a current loop between the battery and the power module 410. In this case, the battery can be charged and discharged in the current loop to generate a pulse current for heating. That is, the regulation circuit enters a battery heating mode. In this case, if a plurality of batteries and a plurality of regulation circuits connected to the batteries respectively are disposed in the system, it is convenient to perform independent heating control on each battery and heat up the plurality of batteries simultaneously.

By controlling the first control switch, the second control switch, and the third control switch, the foregoing embodiment switches the regulation circuit between different working modes, so as to meet the requirements on the charge voltage, discharge voltage, and operating temperature of the battery in different scenarios. In addition, the foregoing embodiment can heat up a plurality of batteries simultaneously, thereby improving the heating efficiency.

According to some embodiments of this application, the power module 310 may further include a bus capacitance element and a battery capacitance element. The bus capacitance element is connected in parallel to each bridge arm among the at least one bridge arm. Two ends of the battery capacitance element are connected to the second end of each inductance element and the second end of each bridge arm respectively.

That is, as shown in FIG. 3 and FIG. 4, the bus capacitance element C1 is connected in parallel to the bus side, and the battery capacitance element C2 is connected in parallel to the battery side. Alternatively, the power module may include a bus capacitance element alone or a battery capacitance element alone, which does not constitute any limitation on this application.

The above embodiment can stabilize the voltage on the bus side and the voltage on the battery side of the regulation circuit, thereby stabilizing the voltage of the entire regulation circuit.

According to some embodiments of this application, each bridge arm among the at least one bridge arm includes a plurality of power semiconductor devices connected in series. The first end of each inductance element is connected between two power semiconductor devices among the plurality of power semiconductor devices of the corresponding one bridge arm. The power module 310 may further include a flying capacitance element connected in parallel to the two power semiconductor devices.

In other words, the power module 310 may assume a multi-level topology, for example, the power module 510 (three-level topology) shown in FIG. 4 and the power module 610 (three-level topology) shown in FIG. 5. Specifically, for example, as shown in FIG. 4, the first end of the inductance element L1 is connected between two power semiconductor devices J12 and J13 of a corresponding bridge arm Q1'. Similarly, the first ends of the inductance elements L2 and L3 are connected between the two power semiconductor devices J22 and J23 of the bridge arm Q2', and between the two power semiconductor devices J32 and J33 of the bridge arm Q3', respectively. The flying capacitance elements C3, C4, and C5 are connected in parallel to the two power semiconductor devices J12 and J13, the two power semiconductor devices J22 and J23, and the two power semiconductor devices J32 and J33, respectively.

This can stabilize the voltage of the regulation circuit to further improve the stability of the regulation circuit.

According to some embodiments of this application, the control switch group 320 may further include a pre-charge control device. The pre-charge control device is connected in parallel to at least one control switch among the first control switch, the second control switch, and the third control switch.

For example, the control switch group 320 may assume the structure of the control switch group 420 shown in FIG. 3, the control switch group 520 shown in FIG. 4, or the control switch group 620 shown in FIG. 5. In other words, the pre-charge control device Y4 is connected in parallel to the first control switch K1. In this case, by turning on the pre-charge control device Y4, the external power supply can perform power-on pre-charge for the bus capacitance element C1. For another example, the control switch group 320 may assume the structure of the control switch group 720 of the regulation circuit 700 shown in FIG. 6. In other words, the pre-charge control device Y4 is connected in parallel to the third control switch K3. In this case, by turning on the pre-charge control device Y4, the battery can perform power-on pre-charge for the battery capacitance element C2. For another example, the pre-charge control device may be connected in parallel to the second control switch instead. For another example, two pre-charge control devices may be disposed and connected in parallel to the first control switch and the second control switch respectively. This application is not limited to such examples.

The pre-charge control device makes it practicable to perform power-on pre-charge safely for the bus capacitance element or battery capacitance element, so as to avoid damage to the circuit caused by an excessive current in the circuit at a moment of connecting the regulation circuit to an external power supply or battery.

According to some embodiments of this application, the pre-charge control device may include a resistance element and a fourth control switch.

For example, as shown in FIG. 3 to FIG. 6, the pre-charge control device Y4 may include a resistance element R1 and a fourth control switch K4. The fourth control switch may be a controllable power semiconductor device such as a contactor or a MOSFET.

This makes it convenient to perform power-on pre-charge safely for the bus capacitor or battery capacitor.

According to some embodiments of this application, the regulation circuit 300 may further include a first safety device FU1 and or a second safety device FU2. The first safety device FU1 is connected between the first control switch K1 and the bus side S1. The second safety device FU2 is connected between the second control switch K2 and the battery side S2, and between the third control switch K3 and the battery side.

Specifically, as shown in FIG. 3 to FIG. 6, the first safety device FU1 is connected between the first control switch K1 and the bus side S1. The second safety device FU2 is connected between the second control switch K2 and the battery side S2, and between the third control switch K3 and the battery side. The first safety device and the second safety device each may be a device capable of blowing out in a case of a short circuit, for example, may be a fuse or the like.

The safety device can protect the regulation circuit, and in turn, improve the stability of the regulation circuit.

According to some embodiments of this application, the regulation circuit 300 may further include: a first lightning protection device F1 and/or a second lightning protection device F2. An input side of the first lightning protection device F1 is connected to the bus side S1. An input side of the second lightning protection device F2 is connected to the battery side S2.

Specifically, as shown in FIG. 3 to FIG. 6, the input side of the first lightning protection device F1 is connected in parallel to the external power supply, and the input side of the second lightning protection device F2 is connected in parallel to the battery.

The lightning protection device can prevent the regulation circuit from being struck by lightning, thereby protecting the circuit.

According to some embodiments of this application, the power module 310 may further include a current detection module (for example, the current detection modules M1, M2, and M3 shown in FIG. 6), a temperature detection module (for example, the temperature detection module W1 shown in FIG. 6), and the like. In some examples, each inductance element in the power module may be connected to a current detection module.

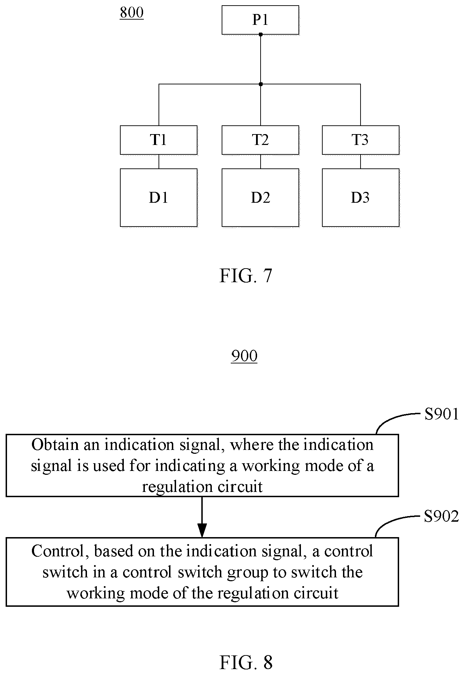

As shown in FIG. 7, a regulation system 800 according to some embodiments of this application may include: batteries D1, D2, and D3 and regulation circuits T1, T2, and T3.

The batteries D1, D2, and D3 may be the battery 100 shown in FIG. 1. The regulation circuits T1, T2, and T3 are consistent with the features of the regulation circuit 300 in FIG. 2, details of which are omitted here. As shown in FIG. 7, the regulation system 800 may include three batteries D1, D2, and D3 and three regulation circuits T1, T2, and T3 connected to the three batteries D1, D2, and D3 respectively. In this case, in a battery heating mode, each battery and a power module in a regulation circuit of the battery forms an independent current loop. Each battery can be pulse-heated by being charged and discharged in the current loop of the battery. In this case, the three regulation circuits can be controlled separately to heat a plurality of batteries simultaneously. It is hereby noted that the regulation system may include one battery and one regulation circuit, or include a plurality of batteries and a plurality of regulation circuits, and this application is not limited to the examples.

By controlling the first control switch, the second control switch, and the third control switch, the foregoing embodiment switches the regulation circuit between different working modes (for example, a buck-boost mode and a battery heating mode), so as to meet the requirements on the charge voltage, discharge voltage, and operating temperature of the battery in different scenarios. In addition, the foregoing embodiment can heat up a plurality of batteries simultaneously, thereby improving the heating efficiency.

According to some embodiments of this application, the regulation system 800 may further include an external power supply P1. The features of the external power supply P1 are the same as those of the external power supply illustrated in FIG. 2, details of which are omitted here.

As shown in FIG. 8, according to some embodiments of this application, a regulation method 900 applicable to the above regulation circuit 300 may include steps S901 and S902.

Step S901: Obtaining an indication signal, where the indication signal is used for indicating a working mode of the regulation circuit; the working mode includes a buck-boost mode and a battery heating mode; in the buck-boost mode, the power module is able to regulate a voltage between the battery and an external power supply; and, in the battery heating mode, the battery is able to be heated up.

Step S902: Controlling, based on the indication signal, the control switch in the control switch group to switch the working mode of the regulation circuit.

The regulation circuit may be the regulation circuit 300 in FIG. 2, and the control switch group may be the control switch group 320 in FIG. 2. As used herein, "controlling the control switch in the control switch group" may mean controlling the on and off state of the control switch such as the first control switch, the second control switch, the third control switch in the control switch group. In some examples, the working modes may include a power-off mode and a standby mode. The power-off mode is a mode of the regulation circuit in which the output power of the power module is zero and all control switches are turned off. The standby mode is a mode in which the regulation circuit has not received any indication after performing power-on pre-charge.

By controlling the first control switch, the second control switch, and the third control switch, the above embodiment can switch the regulation circuit between the buck-boost mode and the battery heating mode. Specifically, by just turning on the first control switch and the third control switch, the power module can regulate the charge voltage and the discharge voltage between the battery and the external power supply. By just turning on the second control switch, a current loop can be formed between the power module and the battery, so as to heat up a plurality of batteries simultaneously and improve the efficiency of heating.

According to some embodiments of this application, the controlling, based on the indication signal, the control switch in the control switch group to switch the working mode of the regulation circuit in step S902, may include: exercising, in response to the indication signal that indicates the buck-boost mode, control to turn on the first control switch and the third control switch and turn off the second control switch to send the regulation circuit into the buck-boost mode; and exercising, in response to the indication signal that indicates the battery heating mode, control to turn off the first control switch and the third control switch and turn on the second control switch to send the regulation circuit into the battery heating mode.

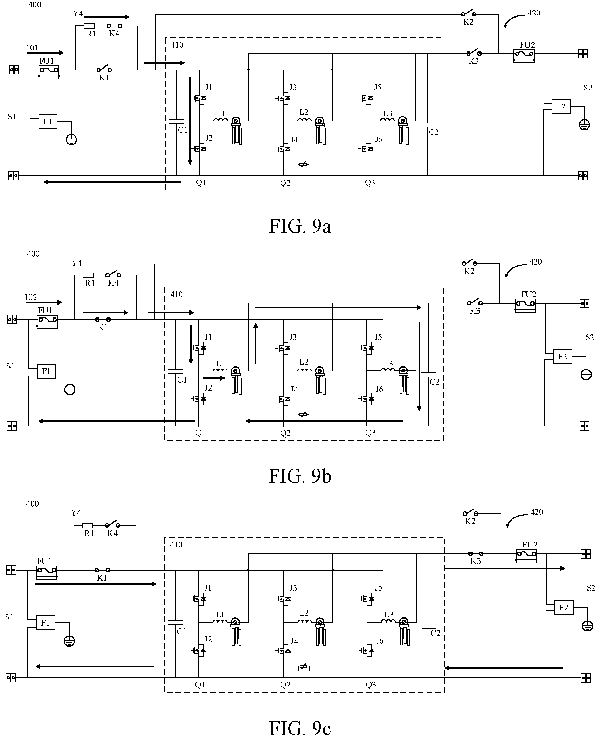

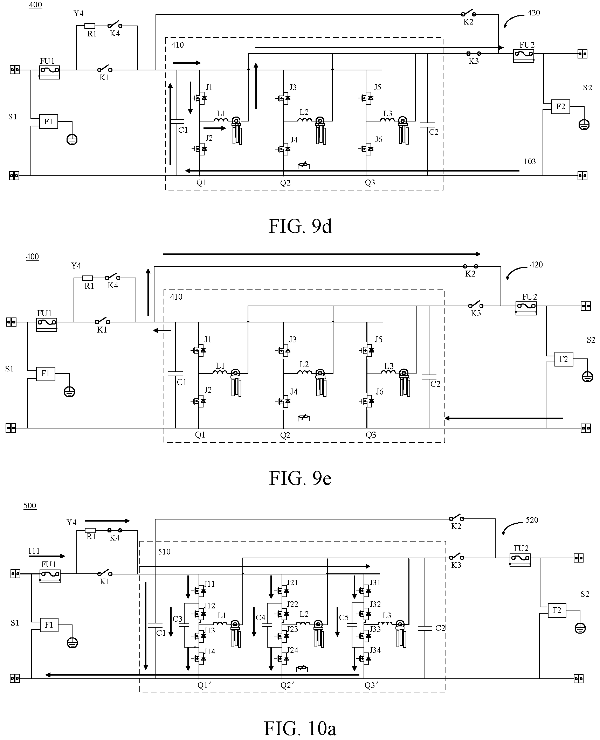

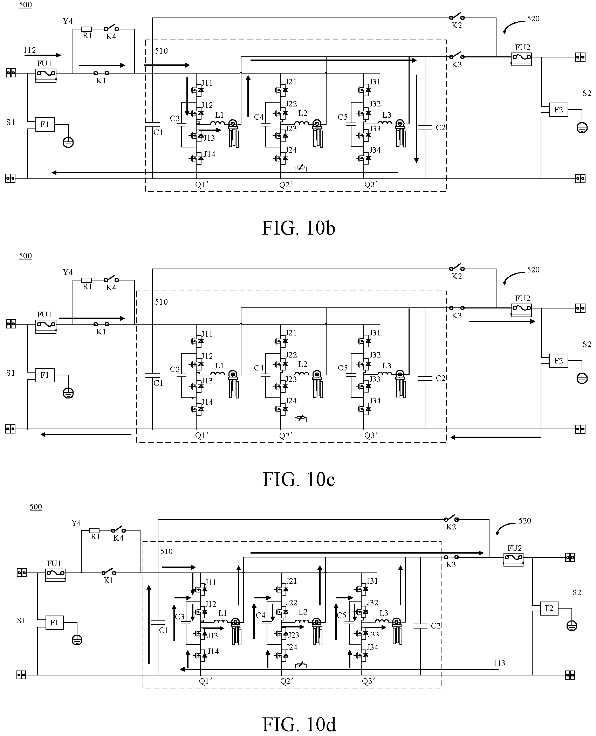

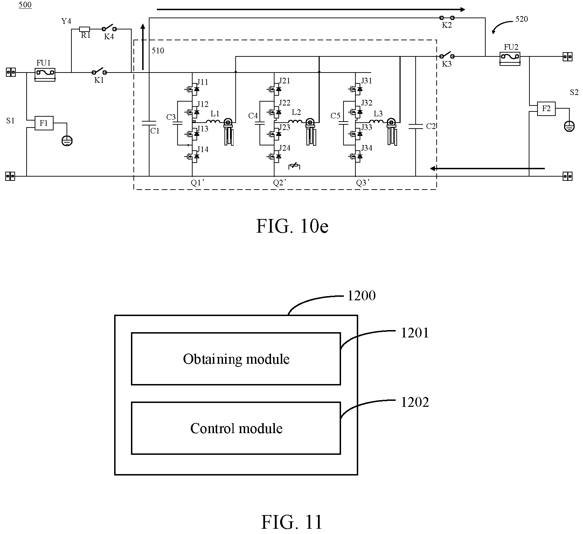

For example, as shown in FIG. 9c, the first control switch K1 and the third control switch K3 are turned on, the second control switch K2 is turned off, and the external power supply and the battery will be connected together by the power module 410, whereupon the regulation circuit can enter a buck-boost mode. As shown in FIG. 9e, the first control switch K1 and the third control switch K3 are turned off, the second control switch K2 is turned on, and the battery will be disconnected from the external power supply and work together with the power module 410 to form a current loop, whereupon the regulation circuit can enter a battery heating mode. For example, the battery can be pulse-heated by being charged and discharged in the current loop. Similarly, as shown in FIG. 10c, the first control switch K1 and the third control switch K3 are turned on and the second control switch K2 is turned off to send the regulation circuit into a buck-boost mode. As shown in FIG. 10e, the first control switch K1 and the third control switch K3 are turned off and the second control switch K2 is turned on to send the regulation circuit into a battery heating mode.

In this way, by controlling the first control switch, the second control switch, and the third control switch, the regulation circuit can be switched between the buck-boost mode and the battery heating mode.

According to some embodiments of this application, the power module further includes a bus capacitance element and a battery capacitance element. The bus capacitance element is connected in parallel to each bridge arm among the at least one bridge arm. Two ends of the battery capacitance element are connected to the second end of each inductance element and the second end of each bridge arm respectively. The regulation method 900 may further include: controlling at least a control switch in the control switch group to charge one of the bus capacitance element or the battery capacitance element; and controlling at least a control switch in the control switch group to charge the other of the bus capacitance element or the battery capacitance element.

The power-on pre-charge may be performed for the capacitance element in the power module before the regulation circuit is caused to enter the buck-boost mode and/or the battery heating mode, thereby avoiding damage to the circuit caused by an excessive current in the circuit at a moment of connecting the regulation circuit to an external power supply or battery.

The above embodiment can increase the stability of the regulation circuit.

According to some embodiments of this application, the control switch group further includes a pre-charge control device. The pre-charge control device is connected in parallel to at least one control switch among the first control switch, the second control switch, and the third control switch. The controlling at least a control switch in the control switch group to charge one of the bus capacitance element or the battery capacitance element includes: exercising control to turn on the pre-charge control device and turn off the first control switch, the second control switch, and the third control switch, so as to charge one of the bus capacitance element or the battery capacitance element, whichever is connected to the pre-charge control device. The controlling at least a control switch in the control switch group to charge the other of the bus capacitance element or the battery capacitance element includes: exercising control to turn off the pre-charge control device, and exercising control to turn on a control switch connected in parallel to the pre-charge control device, so as to charge the other of the bus capacitance element or the battery capacitance element.

Specifically, as shown in FIG. 9a, the pre-charge control device Y4 (more precisely, the fourth control device K4) is turned on, and the first control switch K1, the second control switch K2, and the third control switch K3 are turned off, so as to form a current loop 101 between the external power supply, the pre-charge control device Y4, and the bus capacitance element C1. In this case, the external power supply can pre-charge the bus capacitance element C1 through the current loop 101. Subsequently, as shown in FIG. 9b, after completion of pre-charging the bus capacitance element C1, the first control switch K1 is turned on, and the pre-charge control device Y4 is turned off, so as to form a current loop 102 between the external power supply, the first control switch K1, and the battery capacitance element C2. In this case, the external power supply can pre-charge the battery capacitance element C2 through the current loop 102. Similarly, as shown in FIG. 10a, the pre-charge control device Y4 (more precisely, the fourth control device K4) is turned on, and the first control switch K1, the second control switch K2, and the third control switch K3 are turned off, so as to form a current loop 111 between the external power supply, the pre-charge control device Y4, and the bus capacitance element C1. Subsequently, as shown in FIG. 10b, after completion of pre-charging the bus capacitance element C1, the first control switch K1 is turned on, and the pre-charge control device Y4 is turned off, so as to form a current loop 112 between the external power supply, the first control switch K1, and the battery capacitance element C2.

Alternatively, as shown in FIG. 6, when the pre-charge control device Y4 is connected in parallel to the third control switch K3, control is exercised to turn on the pre-charge control device Y4 and turn off the first control switch K1, the second control switch K2, and the third control switch K3, thereby forming a current loop between the battery, the battery capacitance element C2, and the third control switch K3 to perform power-on pre-charge for the battery capacitance element C2. After completion of pre-charging the battery capacitance element C2, the pre-charge control device Y4 is turned off, and the third control switch K3 is turned on, thereby forming a current loop between the battery, the third control switch K3, and the bus capacitance element C1 to pre-charge the bus capacitance element C1.

It is hereby noted that when the power-on pre-charge is performed for the other of the bus capacitance element or the battery capacitance element, some power semiconductor devices in the power module need to be turned on in addition to the corresponding control switch. As shown in FIG. 9b, the power semiconductor device J1 of an upper arm of a first-phase bridge arm Q1 in the power module 410 may be turned on, so as to give rise to a current loop 102. Additionally or alternatively, other power semiconductor devices such as J2 and/or J3 in the power module 410 may be turned on, and this application is not limited to such examples. Similarly, as shown in FIG. 10b, the power semiconductor devices J12 and J13 of the upper arm of the first-phase bridge arm Q1' in the power module 510 may be turned on, so as to give rise to a current loop 112. Additionally or alternatively, other power semiconductor devices in the power module 410 may be turned on, and this application is not limited to such examples.

The pre-charge control device can improve safety of power-on pre-charge for the bus capacitance element and the battery capacitance element.

In some other embodiments, in a case that no pre-charge control device is disposed, the controlling at least a control switch in the control switch group to charge one of the bus capacitance element or the battery capacitance element may include: exercising control to turn on the first control switch and turn off the second control switch and the third control switch, so as to charge the bus capacitance element. Subsequently, the controlling at least a control switch in the control switch group to charge the other of the bus capacitance element or the battery capacitance element may include: exercising control to turn on some power semiconductor devices in the power module so as to charge the battery capacitance element.

In some other embodiments, in a case that no pre-charge control device is disposed, the controlling at least a control switch in the control switch group to charge one of the bus capacitance element or the battery capacitance element may include: exercising control to turn on the second control switch and turn off the first control switch and the third control switch, so as to charge the battery capacitance element. Subsequently, the controlling at least a control switch in the control switch group to charge the other of the bus capacitance element or the battery capacitance element may include: exercising control to turn on some power semiconductor devices in the power module so as to charge the bus capacitance element.

In some other embodiments, in a case that no pre-charge control device is disposed, the controlling at least a control switch in the control switch group to charge one of the bus capacitance element or the battery capacitance element may include: exercising control to turn on the third control switch and turn off the first control switch and the second control switch, so as to charge the battery capacitance element. Subsequently, the controlling at least a control switch in the control switch group to charge the other of the bus capacitance element or the battery capacitance element may include: exercising control to turn on some power semiconductor devices in the power module so as to charge the bus capacitance element.

According to some embodiments of this application, the controlling at least a control switch in the control switch group to charge the other of the bus capacitance element or the battery capacitance element includes: controlling, in response to a first preset condition, at least a control switch in the control switch group to charge the other of the bus capacitance element or the battery capacitance element. The first preset condition includes at least one of: a time period for charging one of the bus capacitance element or the battery capacitance element is less than or equal to a first preset time threshold; or, a voltage of one of the bus capacitance element or the battery capacitance element is greater than or equal to a first preset voltage threshold.

In other words, the power-on pre-charge is performed for the other of the bus capacitance element or the battery capacitance element only when the power-on pre-charge for one of the bus capacitance element or the battery capacitance element meets specified requirements (for example, the charging time is not excessive, and the voltage of the capacitance element is greater than or equal to a preset voltage threshold). When one of the bus capacitance element or the battery capacitance element is a bus capacitance element (as shown in FIG. 9a and FIG. 10a), the first preset voltage threshold may be set to a value slightly lower than the voltage of the external power supply, so that the voltage of the charged bus capacitance element is close to the voltage of the external power supply. When one of the bus capacitance element or the battery capacitance element is a battery capacitance element (as shown in FIG. 6), the first preset voltage threshold may be set to a value slightly lower than the voltage of the battery, so that the voltage of the charged battery capacitance element is close to the voltage of the battery.

In addition, when the power module further includes a flying capacitance element, the first preset condition may further include: the voltage of the flying capacitance element is greater than or equal to a specified preset voltage threshold. The specified preset voltage threshold may be set to a value slightly lower than half of the voltage of the external power supply.

In some examples, the first preset time threshold may be set empirically or according to the characteristics of the regulation circuit.

In some examples, the controlling, in response to a first preset condition, at least a control switch in the control switch group to charge the other of the bus capacitance element or the battery capacitance element may include: exercising, in response to the first preset condition, control to turn off the pre-charge control device and turn on a control switch connected in parallel to the pre-charge control device, so as to charge the other of the bus capacitance element or the battery capacitance element.

This ensures that the voltage of the pre-charged battery capacitance element or busbar capacitor meets a specified requirement (for example, the voltage is close to the voltage of the battery or the voltage of the external power supply), and in turn, ensures normal operation of the regulation circuit.

According to some embodiments of this application, the exercising, in response to the indication signal that indicates the buck-boost mode, control to turn on the first control switch and the third control switch and turn off the second control switch to send the regulation circuit into the buck-boost mode, includes: exercising, in response to a second preset condition, control to turn on the first control switch and the third control switch and turn off the second control switch to send the regulation circuit into the buck-boost mode. The second preset condition includes at least one of: a time period for charging the other of the bus capacitance element or the battery capacitance element is less than or equal to a second preset time threshold; or, a voltage of the other of the bus capacitance element or the battery capacitance element is greater than or equal to a second preset voltage threshold.

In other words, the regulation circuit is caused to enter the buck-boost mode only when the power-on pre-charge for the other of the bus capacitance element or the battery capacitance element meets specified requirements (for example, the charging time is not excessive, and the voltage of the capacitance element is greater than or equal to a preset voltage threshold). When the other of the bus capacitance element or the battery capacitance element is a battery capacitance element (as shown in FIG. 9a and FIG. 10a), the second preset voltage threshold may be set to a value slightly lower than the voltage of the battery, so that the voltage of the charged battery capacitance element is close to the voltage of the battery. In addition, when the other of the bus capacitance element or the battery capacitance element is a bus capacitance element (as shown in FIG. 6), the second preset voltage threshold may be set to a value slightly lower than the voltage of the external power supply, so that the voltage of the charged bus capacitance element is close to the voltage of the external power supply.

In some examples, the second preset time threshold may be set empirically or according to the characteristics of the regulation circuit.

This ensures that the voltage of the pre-charged battery capacitance element or busbar capacitor meets a specified requirement (for example, the voltage is close to the voltage of the battery or the voltage of the external power supply), and in turn, ensures normal operation of the regulation circuit.

According to some embodiments of this application, the power module includes at least one bridge arm and at least one inductance element. A first end of each inductance element among the at least one inductance element is connected to a corresponding one bridge arm among the at least one bridge arm. Each bridge arm among the at least one bridge arm includes a plurality of power semiconductor devices connected in series. The first end of each inductance element is connected between two power semiconductor devices among the plurality of power semiconductor devices of the corresponding one bridge arm. The power module further includes a flying capacitance element connected in parallel to the two power semiconductor devices. The controlling at least a control switch in the control switch group to charge one of the bus capacitance element or the battery capacitance element includes: exercising, for each bridge arm, control to turn on a power semiconductor device other than the two power semiconductor devices among the plurality of power semiconductor devices and turn off the two power semiconductor devices; and controlling a control switch in the control switch group to charge one of the bus capacitance element or the battery capacitance element, and charge the flying capacitance element.

In other words, when the power module further includes a flying capacitor, power-on pre-charge needs to be further performed for the flying capacitance element. As shown in FIG. 10a, during the power-on pre-charge for the bus capacitance element C1, the power-on pre-charge is performed for the flying capacitance elements C3, C4, and C5 concurrently. In this case, the first and fourth power semiconductor devices J11, J14, J21, J24, J31, and J34 in all the bridge arms Q1', Q2', and Q3' may be turned on first, and then the pre-charge control device Y4 is turned on, and the first, second, and third control switches K1, K2, and K3 are turned off to form a current loop 111 connected to the flying capacitance element. Alternatively, a power semiconductor device other than the two power semiconductor devices among the plurality of power semiconductor devices is turned on, and the pre-charge control device Y4 is turned on concurrently, so as to perform power-on pre-charge for the flying capacitance element, but this application is not limited to such examples.

In this case, the first preset condition may further include: the voltage of the flying capacitance element is greater than or equal to a specified preset voltage threshold. The specified preset voltage threshold may be set to a value slightly lower than half of the voltage of the external power supply. This ensures that the voltage of the pre-charged flying capacitance element is close to half of the voltage of the external power supply, so as to meet requirements of normal operation of the regulation circuit.

In some examples, the control method in the above step (that is, controlling the control switch in the control switch group to charge one of the bus capacitance element or the battery capacitance element, and to charge the flying capacitance element) is the same as the control method in the preceding step (that is, controlling at least a control switch in the control switch group to charge one of the bus capacitance element or the battery capacitance element), details of which are omitted here.

In this way, power-on pre-charge can be performed for the flying capacitance element, so as to avoid damage to the circuit caused by an excessive current in the circuit at a moment of connecting the regulation circuit to an external power supply or battery.

According to some embodiments of this application, the regulation method 900 may further include: obtaining a historical voltage and a current voltage of the flying capacitance element; determining a difference between the historical voltage and the current voltage; and controlling, in response to a determining result that the difference between the historical voltage and the current voltage is greater than a preset difference threshold, a plurality of power semiconductor devices of the bridge arm connected to the flying capacitance element to regulate the voltage of the flying capacitance element.

For example, as shown in FIG. 10a to FIG. 10e, when the voltage of the flying capacitance element C3 changes abruptly (that is, a difference between a historical voltage and a current voltage is greater than a preset difference threshold), the voltage of the flying capacitance element C3 can be adjusted by controllably alternating the on/off state between the first power semiconductor device J11 and the second power semiconductor device J12 of the first-phase bridge arm Q1'. It is hereby noted that other flying capacitance elements may also be regulated in the above manner, and this application is not limited to such examples.

The above steps may be performed throughout operation of the regulation circuit 300 to monitor the status of the flying capacitance element in real time.

In this way, the voltage of the flying capacitor can be monitored and regulated in real time to avoid abrupt changes of the voltage, thereby ensuring normal operation of the regulation circuit.

According to some embodiments of this application, the exercising, in response to the indication signal that indicates the battery heating mode, control to turn off the first control switch and the third control switch and turn on the second control switch to send the regulation circuit into the battery heating mode, includes: exercising control to turn off the first control switch and the second control switch and turn on the third control switch to step down a voltage of at least the bus capacitance element; and exercising, in response to a third preset condition, control to turn on the second control switch and turn off the third control switch to send the regulation circuit into the battery heating mode. The third preset condition includes at least one of: a time period for stepping down the voltage of the bus capacitance element is less than or equal to a third preset time threshold; or, the voltage of the bus capacitance element is greater than or equal to a third preset voltage threshold.

Specifically, for example, after receiving an indication signal of the battery heating mode, as shown in FIG. 9d, the first control switch K1 and the second control switch K2 are turned off and the third control switch K3 is turned on (in some cases, some power semiconductor devices in the power module also need to be turned on). In this case, a current loop 103 is formed between the battery, the third control switch K3, and the bus capacitance element C1 to discharge the bus capacitance element C1. For another example, when the power module further includes a flying capacitance element, as shown in FIG. 10d, the first control switch K1 and the second control switch K2 are turned off, and the third control switch K3 and some power semiconductor devices in the power module are turned on. In this case, a current loop 113 is formed between the battery, the third control switch K3, the bus capacitance element C1, and the flying capacitance elements C3 to C5 to discharge the bus capacitance element C1 and the flying capacitance elements C3 to C5. It is hereby noted that when the control switch group further includes a pre-charge control device, the pre-charge control device needs to keep turned off in the above step of stepping down voltage.

In addition, the regulation circuit is caused to enter the battery heating mode only when the discharge for the bus capacitance element meets specified requirements (for example, the discharging time is not excessive, and the voltage of the bus capacitance element is greater than or equal to a third preset voltage threshold). The third preset voltage threshold may be set to a value slightly lower than the voltage of the battery, so that the voltage of the discharged bus capacitance element is close to the voltage of the battery. In addition, when the power module further includes a flying capacitance element, the third preset condition may further include: the voltage of the flying capacitance element is greater than or equal to a specified preset voltage threshold. The specified preset voltage threshold may be set to a value slightly lower than half of the voltage of the battery. This ensures that the voltage of the discharged flying capacitance element is close to half of the voltage of the battery, so as to meet requirements of normal operation of the regulation circuit.

This ensures that the bus capacitor meets the specified requirement (for example, the voltage of the bus capacitor is close to the voltage of the battery) in battery heating mode, and enables the regulation circuit to enter the battery heating mode stably.

According to some embodiments of this application, the exercising, in response to the indication signal that indicates the buck-boost mode, control to turn on the first control switch and the third control switch and turn off the second control switch to send the regulation circuit into the buck-boost mode, includes: regulating a voltage of the battery capacitance element in response to the regulation circuit being in the battery heating mode; exercising, in response to the voltage of the battery capacitance element being greater than or equal to a fourth preset voltage threshold, control to turn off the second control switch and turn on the third control switch to charge the bus capacitance element; and exercising, in response to the voltage of the bus capacitance element being greater than or equal to a fifth preset voltage threshold, control to turn on the first control switch to send the regulation circuit into the buck-boost mode.

In other words, when the regulation circuit is in the battery heating mode, the voltage of the battery capacitance element may be adjusted to a value close to the voltage of the battery (that is, the fourth preset voltage threshold may be set to a value slightly lower than the voltage of the battery). Subsequently, control is exercised to turn off the second control switch and turn on the third control switch (in this case, the regulation circuit is in the battery heating mode, and the first control switch K1 needs no operation, that is, remains in the off state) to pre-charge the bus capacitance element. Next, when the bus capacitance element is pre-charged until a voltage close to the voltage of the external power supply (that is, the fifth preset voltage threshold may be set to a value slightly lower than the voltage of the external power supply), the first control switch is controlled to be turned on to send the regulation circuit into the buck-boost mode. It is hereby noted that the above steps need to be performed in sequence so that the regulation circuit switches from the battery heating mode to the buck-boost mode.

In addition, when the power module further includes a flying capacitance element, the exercising, in response to the voltage of the battery capacitance element being greater than or equal to a fourth preset voltage threshold, control to turn off the second control switch and turn on the third control switch to charge the bus capacitance element, may include: exercising control to turn off the second control switch and turn on the third control switch and some power semiconductor devices in the power module, so as to charge the bus capacitance element and the flying capacitance element. In addition, the exercising, in response to the voltage of the bus capacitance element being greater than or equal to a fifth preset voltage threshold, control to turn on the first control switch to send the regulation circuit into the buck-boost mode, includes: exercising, in response to a fact that the voltage of the bus capacitance element is greater than or equal to the fifth preset voltage threshold and that the voltage of the flying capacitance element is greater than or equal to a specified preset voltage threshold, control to turn on the first control switch to send the regulation circuit into the buck-boost mode. The specified preset voltage threshold may be set to a value slightly lower than half of the voltage of the external power supply.

In this way, the regulation circuit in the battery heating mode can quickly switch to the buck-boost mode without a need to perform power-on pre-charge for the bus capacitance element by turning on the pre-charge control device again.

Alternatively, the above step of power-on pre-charge for the bus capacitance element and the battery capacitance element may be repeated. To be specific, at least a control switch in the control switch group is controlled to charge one of the bus capacitance element or the battery capacitance element, and at least a control switch in the control switch group is controlled to charge the other of the bus capacitance element or the battery capacitance element.

According to some embodiments of this application, before the power-on pre-charge is performed for the bus capacitance element and the battery capacitance element, the regulation method may further include: performing a low-voltage power-on self-test on the regulation circuit 300. Specifically, for example, various related components (including power semiconductor devices, control switches, contact switches of the battery, and the like) in the regulation circuit 300 are detected to determine whether any fault occurs.

According to some embodiments of this application, after the power-on self-test is performed, the regulation method 900 may further include: detecting, in response to the received power-on pre-charge instruction, whether the voltage of the external power supply and the voltage of the battery fall within a specified range. Subsequently, if the voltage of the external power supply and the voltage of the battery fall within the specified range, the step of power-on pre-charge is performed on the bus capacitance element and the battery capacitance element.

According to some embodiments of this application, the regulation method 900 may further include: sending a current value and a voltage value of the regulation circuit as well as status information of each component to an upper controller. In this way, it is convenient for the upper controller to monitor whether the regulation circuit 300 is in normal operation.

According to some embodiments of this application, the regulation method 900 may further include: adjusting an output power of the power module in response to an indication signal indicating a power-off mode; and exercising, in response to a determining result that the output power of the power module is equal to zero, control to turn off the first control switch, the second control switch, and the third control switch to send the regulation circuit into a power-off mode.

As shown in FIG. 11, according to some embodiments of this application, a regulation device 1200 applicable to the regulation circuit 300 disclosed in the above embodiment may include an obtaining module 1201 and a control module 1202. The obtaining module 1201 is configured to obtain an indication signal, where the indication signal is used for indicating a working mode of the regulation circuit. The working mode includes a buck-boost mode and a battery heating mode. In the buck-boost mode, the power module is able to regulate a voltage between the battery and an external power supply. In the battery heating mode, the battery is able to be heated up. The control module 1202 is configured to control, based on the indication signal, the control switch in the control switch group to switch the working mode of the regulation circuit.

Understandably, the modules of the device 1200 shown in FIG. 11 may correspond to the steps in the method 900 illustrated in FIG. 8. Therefore, the operations, features, and advantages described above with respect to the method 900 are also applicable to the device 1200 and the modules included in the device. For brevity, some operations, features, and advantages of the device are not described in detail here.

By controlling the first control switch, the second control switch, and the third control switch, the above embodiment can switch the regulation circuit between the buck-boost mode and the battery heating mode. Specifically, by just turning on the first control switch and the third control switch, the power module can regulate the charge voltage and the discharge voltage between the battery and the external power supply. By just turning on the second control switch, a current loop can be formed between the power module and the battery, so as to heat up a plurality of batteries simultaneously and improve the efficiency of heating.

An embodiment of this application provides an electronic device. The electronic device includes: at least one processor; and a memory communicatively connected to the at least one processor. The memory stores an instruction executable by the at least one processor. The instruction is executed by the at least one processor so that the at least one processor is enabled to perform the regulation method 900 described above.

An embodiment of this application provides a computer-readable storage medium that stores a computer instruction. The computer instruction is configured to cause a computer to perform the regulation method 900 described above.

An embodiment of this application provides a computer program product, including a computer program. When executed by a processor, the computer program implements the regulation method 900 described above.

As shown in FIG. 4, a regulation circuit applicable to a battery according to some embodiments of this application may include: a bus side S1, a battery side S2, a power module 510, and a control switch group 520.

The power module 510 is configured to regulate a voltage and connected between the battery side S2 and the bus side S1. The power module 310 may include a bus capacitance element C1, a battery capacitance element C2, at least one bridge arm Q1', Q2', or Q3', and at least one inductance element L1, L2, or L3. The bus capacitance element C1 is connected in parallel to each bridge arm among the at least one bridge arm. Two ends of the battery capacitance element C2 are connected to the second end of each inductance element and the second end of each bridge arm respectively. Each bridge arm (Q1') includes a plurality of power semiconductor devices connected in series (such as J11, J12, J13, and J14). The first end of each inductance element (such as L1) is connected between two power semiconductor devices (such as J12 and J13) among the plurality of power semiconductor devices of the corresponding one bridge arm (such as Q1'). The power module 510 may further include a flying capacitance element (such as C3) connected in parallel to the two power semiconductor devices (such as J12 and J13).

The control switch group 320 may include a first control switch K1, a second control switch K2, and a third control switch K3. A first end of the first control switch K1 is connected to a first end of the bus side S1, and a second end of the first control switch K1 is connected to a first end of each bridge arm among the at least one bridge arm. A first end of the second control switch K2 is connected to the second end of the first control switch K1, and a second end of the second control switch K2 is connected to a first end of the battery side S2. A first end of the third control switch K3 is connected to a second end of each inductance element among the at least one inductance element, and a second end of the third control switch K3 is connected to the second end of the second control switch K2. A second end of each bridge arm among the at least one bridge arm is connected to a second end of the bus side S1 and a second end of the battery side S2. The control switch group 520 may further include a pre-charge control device Y4. The pre-charge control device is connected in parallel to the first control switch K1.

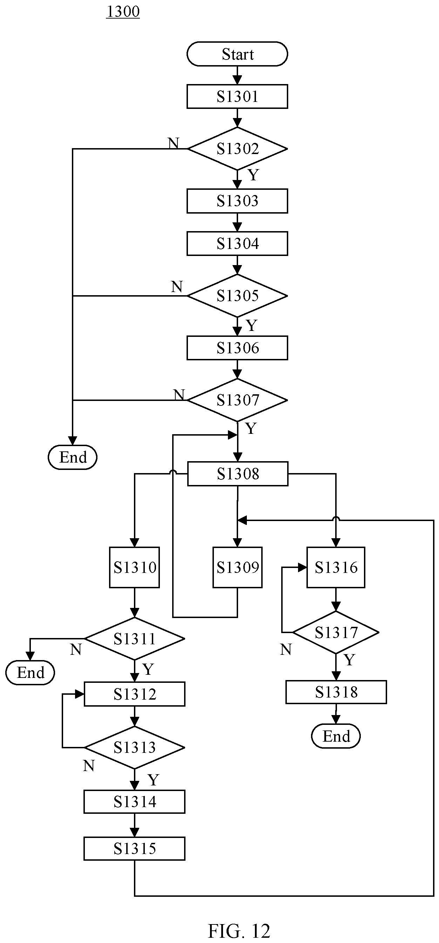

As shown in FIG. 12, according to some embodiments of this application, a regulation method 1300 applicable to the regulation circuit 300 may include steps S1301 to S1318.

Step S1301: Perform a low-voltage power-on self-test on a regulation circuit.

Step S1302: Detect, in response to a received power-on pre-charge instruction, whether a voltage of an external power supply and a voltage of a battery fall within a specified range.

Step S1303: Exercise, for each bridge arm, control to turn on a power semiconductor device other than two power semiconductor devices among a plurality of power semiconductor devices and turn off the two power semiconductor devices.

Step S1304: Exercise control to turn on a pre-charge control device and turn off a first control switch, a second control switch, and a third control switch, so as to charge one of a bus capacitance element or a battery capacitance element and charge a flying capacitance element.

Step S1305: Determine whether a first preset condition is satisfied, where the first preset condition includes: a time period for charging the one of the bus capacitance element or the battery capacitance element is less than or equal to a first preset time threshold; a voltage of the one of the bus capacitance element or the battery capacitance element is greater than or equal to a first preset voltage threshold; or, a voltage of the flying capacitance element is greater than or equal to a specified preset voltage threshold.

Step S1306: Exercise control to turn off the pre-charge control device, and exercise control to turn on a control switch connected in parallel to the pre-charge control device, so as to charge the other of the bus capacitance element or the battery capacitance element.

Step S1307: Determine whether a second preset condition is satisfied, where the second preset condition includes: a time period for charging the other of the bus capacitance element or the battery capacitance element is less than or equal to a second preset time threshold; or, a voltage of the other of the bus capacitance element or the battery capacitance element is greater than or equal to a second preset voltage threshold.

Step S1308: Obtain an indication signal.

Step S1309: Exercise, in response to the indication signal that indicates the buck-boost mode, control to turn on the first control switch and the third control switch and turn off the second control switch to send the regulation circuit into the buck-boost mode.

Step S1310: Exercise, in response to the indication signal indicating a battery heating mode, control to turn off the first control switch and the second control switch and turn on the third control switch to step down a voltage of at least the bus capacitance element.

Step S1311: Determine whether a third preset condition is satisfied, where the third preset condition includes at least one of: a time period for stepping down the voltage of the bus capacitance element is less than or equal to a third preset time threshold; or, the voltage of the bus capacitance element is greater than or equal to a third preset voltage threshold.

Step S1312: Exercise control to turn on the second control switch and turn off the third control switch to send the regulation circuit into a battery heating mode.

S1313: Obtain an indication signal and determine whether the indication signal indicates a buck-boost mode.

Step S1314: Regulate a voltage of the battery capacitance element.

Step S1315: Exercise, in response to the voltage of the battery capacitance element being greater than or equal to a fourth preset voltage threshold, control to turn off the second control switch and turn on the third control switch to charge the bus capacitance element.

Step S1316: Regulate an output power of a power module in response to the indication signal indicating a power-off mode.

Step S1317: Determine whether the output power of the power module is equal to zero.

Step S1318: Exercise control to turn off the first control switch, the second control switch, and the third control switch to send the regulation circuit into a power-off mode.

The features of the steps in the above method 1300 are the same as those in the corresponding steps of the method 900. For brevity, details are omitted here.

Finally, it is hereby noted that the foregoing embodiments are merely intended to describe the technical solutions of this application but not to limit this application. Although this application has been described in detail with reference to the foregoing embodiments, a person of ordinary skill in the art understands that modifications may still be made to the technical solutions described in the foregoing embodiments, or equivalent replacements may still be made to some or all technical features in the technical solutions. Such modifications and equivalent replacements fall within the scope of the claims and specification hereof without making the essence of the corresponding technical solutions depart from the scope of the technical solutions of the embodiments of this application. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A regulation circuit applicable to a battery, comprising:
a battery side, configured to be connected to the battery;
a bus side, configured to be connected to an external power supply;
a power module, configured to regulate a voltage and connected between the battery side and the bus side; and
a control switch group, wherein the control switch group comprises:
a first control switch, connected between the bus side and the power module;
a second control switch, connected between the first control switch and the battery side; and
a third control switch, connected between the power module and the battery side.

2. The regulation circuit according to claim 1, wherein the power module comprises at least one bridge arm and at least one inductance element, and a first end of each inductance element among the at least one inductance element is connected to a corresponding one bridge arm among the at least one bridge arm.

3. The regulation circuit according to claim 2, wherein
a first end of the first control switch is connected to a first end of the bus side, and a second end of the first control switch is connected to a first end of each bridge arm among the at least one bridge arm;
a first end of the second control switch is connected to the second end of the first control switch, and a second end of the second control switch is connected to a first end of the battery side;
a first end of the third control switch is connected to a second end of each inductance element among the at least one inductance element, and a second end of the third control switch is connected to the second end of the second control switch; and
a second end of each bridge arm among the at least one bridge arm is connected to a second end of the bus side and a second end of the battery side.

4. The regulation circuit according to claim 3, wherein the power module further comprises a bus capacitance element and a battery capacitance element, the bus capacitance element is connected in parallel to each bridge arm among the at least one bridge arm, and two ends of the battery capacitance element are connected to the second end of each inductance element and the second end of each bridge arm respectively.

5. The regulation circuit according to any one of claims 2 to 4, wherein
each bridge arm among the at least one bridge arm comprises a plurality of power semiconductor devices connected in series, the first end of each inductance element is connected between two power semiconductor devices among the plurality of power semiconductor devices of the corresponding one bridge arm; and
the power module further comprises a flying capacitance element connected in parallel to the two power semiconductor devices.

6. The regulation circuit according to any one of claims 1 to 5, wherein the control switch group further comprises a pre-charge control device, and the pre-charge control device is connected in parallel to at least one control switch among the first control switch, the second control switch, and the third control switch.

7. The regulation circuit according to claim 6, wherein the pre-charge control device comprises a resistance element and a fourth control switch.

8. The regulation circuit according to any one of claims 1 to 7, further comprising:
a first safety device, connected between the first control switch and the bus side; and/or
a second safety device, connected between the second control switch and the battery side, and between the third control switch and the battery side.

9. The regulation circuit according to any one of claims 1 to 8, further comprising:
a first lightning protection device, wherein an input side of the first lightning protection device is connected to the bus side; and/or
a second lightning protection device, wherein an input side of the second lightning protection device is connected to the battery side.

10. A regulation system, comprising a battery and the regulation circuit according to any one of claims 1 to 9.

11. A regulation method applicable to the regulation circuit according to any one of claims 1 to 9, comprising:
obtaining an indication signal, wherein the indication signal is used for indicating a working mode of the regulation circuit; the working mode comprises a buck-boost mode and a battery heating mode; in the buck-boost mode, the power module is able to regulate a voltage between the battery and an external power supply; and, in the battery heating mode, the battery is able to be heated up; and
controlling, based on the indication signal, the control switch in the control switch group to switch the working mode of the regulation circuit.

12. The regulation method according to claim 11, wherein the controlling, based on the indication signal, the control switch in the control switch group to switch the working mode of the regulation circuit, comprises:
exercising, in response to the indication signal that indicates the buck-boost mode, control to turn on the first control switch and the third control switch and turn off the second control switch to send the regulation circuit into the buck-boost mode; and
exercising, in response to the indication signal that indicates the battery heating mode, control to turn off the first control switch and the third control switch and turn on the second control switch to send the regulation circuit into the battery heating mode.

13. The regulation method according to claim 12, wherein
the power module further comprises a bus capacitance element and a battery capacitance element, the bus capacitance element is connected in parallel to each bridge arm among the at least one bridge arm, and two ends of the battery capacitance element are connected to the second end of each inductance element and the second end of each bridge arm respectively;
the regulation method further comprises:
controlling at least a control switch in the control switch group to charge one of the bus capacitance element or the battery capacitance element; and
controlling at least a control switch in the control switch group to charge the other of the bus capacitance element or the battery capacitance element.

14. The regulation method according to claim 13, wherein
the control switch group further comprises a pre-charge control device, and the pre-charge control device is connected in parallel to one control switch among the first control switch, the second control switch, and the third control switch; and
the controlling at least a control switch in the control switch group to charge one of the bus capacitance element or the battery capacitance element comprises:
exercising control to turn on the pre-charge control device and turn off the first control switch, the second control switch, and the third control switch, so as to charge one of the bus capacitance element or the battery capacitance element, whichever is connected to the pre-charge control device; and
the controlling at least a control switch in the control switch group to charge the other of the bus capacitance element or the battery capacitance element comprises:
exercising control to turn off the pre-charge control device, and exercising control to turn on a control switch connected in parallel to the pre-charge control device, so as to charge the other of the bus capacitance element or the battery capacitance element.

15. The regulation method according to claim 13, wherein
the controlling at least a control switch in the control switch group to charge the other of the bus capacitance element or the battery capacitance element comprises: controlling, in response to a first preset condition, at least a control switch in the control switch group to charge the other of the bus capacitance element or the battery capacitance element; and
the first preset condition comprises at least one of: a time period for charging the one of the bus capacitance element or the battery capacitance element is less than or equal to a first preset time threshold; or, a voltage of the one of the bus capacitance element or the battery capacitance element is greater than or equal to a first preset voltage threshold.

16. The regulation method according to any one of claims 13 to 15, wherein
the exercising, in response to the indication signal that indicates the buck-boost mode, control to turn on the first control switch and the third control switch and turn off the second control switch to send the regulation circuit into the buck-boost mode, comprises: exercising, in response to a second preset condition, control to turn on the first control switch and the third control switch and turn off the second control switch to send the regulation circuit into the buck-boost mode; and
the second preset condition comprises at least one of: a time period for charging the other of the bus capacitance element or the battery capacitance element is less than or equal to a second preset time threshold; or, a voltage of the other of the bus capacitance element or the battery capacitance element is greater than or equal to a second preset voltage threshold.

17. The regulation method according to any one of claims 13 to 16, wherein
the power module comprises at least one bridge arm and at least one inductance element, a first end of each inductance element among the at least one inductance element is connected to a corresponding one bridge arm among the at least one bridge arm, each bridge arm among the at least one bridge arm comprises a plurality of power semiconductor devices connected in series, the first end of each inductance element is connected between two power semiconductor devices among the plurality of power semiconductor devices of the corresponding one bridge arm, and the power module further comprises a flying capacitance element connected in parallel to the two power semiconductor devices; and
the controlling at least a control switch in the control switch group to charge one of the bus capacitance element or the battery capacitance element comprises:
exercising, for each bridge arm, control to turn on a power semiconductor device other than the two power semiconductor devices among the plurality of power semiconductor devices and turn off the two power semiconductor devices; and
controlling a control switch in the control switch group to charge the one of the bus capacitance element or the battery capacitance element, and charge the flying capacitance element.

18. The regulation method according to claim 17, further comprising:
obtaining a historical voltage and a current voltage of the flying capacitance element;
determining a difference between the historical voltage and the current voltage; and
controlling, in response to a determining result that the difference between the historical voltage and the current voltage is greater than a preset difference threshold, a plurality of power semiconductor devices of the bridge arm connected to the flying capacitance element to regulate the voltage of the flying capacitance element.

19. The regulation method according to any one of claims 13 to 18, wherein the exercising, in response to the indication signal that indicates the battery heating mode, control to turn off the first control switch and the third control switch and turn on the second control switch to send the regulation circuit into the battery heating mode, comprises:
exercising control to turn off the first control switch and the second control switch and turn on the third control switch to step down a voltage of at least the bus capacitance element; and
exercising, in response to a third preset condition, control to turn on the second control switch and turn off the third control switch to send the regulation circuit into the battery heating mode, wherein the third preset condition comprises at least one of: a time period for stepping down the voltage of the bus capacitance element is less than or equal to a third preset time threshold; or, the voltage of the bus capacitance element is greater than or equal to a third preset voltage threshold.

20. The regulation method according to any one of claims 13 to 19, wherein the exercising, in response to the indication signal that indicates the buck-boost mode, control to turn on the first control switch and the third control switch and turn off the second control switch to send the regulation circuit into the buck-boost mode, comprises:
regulating a voltage of the battery capacitance element in response to the regulation circuit being in the battery heating mode;
exercising, in response to the voltage of the battery capacitance element being greater than or equal to a fourth preset voltage threshold, control to turn off the second control switch and turn on the third control switch to charge the bus capacitance element; and
exercising, in response to the voltage of the bus capacitance element being greater than or equal to a fifth preset voltage threshold, control to turn on the first control switch to send the regulation circuit into the buck-boost mode.

21. A regulation device applicable to the regulation circuit according to any one of claims 1 to 9, comprising:
an obtaining module, configured to obtain an indication signal, wherein the indication signal is used for indicating a working mode of the regulation circuit; the working mode comprises a buck-boost mode and a battery heating mode; in the buck-boost mode, the power module is able to regulate a voltage between the battery and an external power supply; and, in the battery heating mode, the battery is able to be heated up; and
a control module, configured to control, based on the indication signal, the control switch in the control switch group to switch the working mode of the regulation circuit.

22. An electronic device, comprising at least one processor and a memory communicatively connected to the at least one processor, wherein
the memory stores an instruction executable by the at least one processor, and the instruction is executed by the at least one processor so that the at least one processor is enabled to perform the regulation method according to any one of claims 12 to 20.

23. A computer-readable storage medium that stores a computer instruction, wherein the computer instruction is configured to cause a computer to perform the regulation method according to any one of claims 12 to 20.

24. A computer program product, comprising a computer program, wherein, when executed by a processor, the computer program implements the regulation method according to any one of claims 12 to 20.
